# EUROPÄISCHE PATENTSCHRIFT

(11) **EP 3 930 546 B1**
(45) Veröffentlichungstag und Bekanntmachung des Hinweises auf die Patenterteilung: **07.06.2023**
(21) Anmeldenummer: 20744038.9
(22) Anmeldetag: 24.07.2020
(51) Int. Cl.: A47J 31/44

(54) **KAFFEE-VOLLAUTOMAT**
AUTOMATIC COFFEE MAKER
MACHINE À CAFÉ ENTIÈREMENT AUTOMATIQUE

(30) Priorität: 24.07.2019 EP 19188196
(43) Veröffentlichungstag der Anmeldung: 05.01.2022
(73) Patentinhaber: JURA ELEKTROAPPARATE AG, 4626 Niederbuchsiten (CH)
(72) Erfinder: BAUR, Philipp, 3427 Utzenstorf (CH)
(74) Vertreter: Mertzlufft-Paufler, Cornelius
(86) Internationale Anmeldenummer: PCT/EP2020/070918
(87) Internationale Veröffentlichungsnummer: WO 2021/013977

(56) Entgegenhaltungen:
- EP-A1- 3 015 035
- CN-U- 206 303 729
- CN-U- 208 192 933
- DE-A1-102006 027 267
- SuperautoPro: "Jura Impressa S9 One-Touch Video", Youtube, 22. Januar 2018 (2018-01-22), Seite 2 pp., XP054980065, Gefunden im Internet: URL:https://www.youtube.com/watch?v=b90-AK Hyo3E [gefunden am 2019-12-19]

## Beschreibung

Die Erfindung betrifft einen Kaffee-Vollautomaten, mit einem von einem Grundgerät abnehmbaren Wassertank, der einen Wasserauslass aufweist, wobei der Wasserauslass mit einer Anschlussöffnung, die an dem Grundgerät ausgebildet ist, zur Wasserentnahme im Gebrauch verbindbar ist.

Derartige Kaffee-Vollautomaten sind bekannt, wobei der Wassertank zum Auffüllen von dem Grundgerät abgenommen wird. Für eine stabile Halterung des Wassertanks am Grundgerät werden bisher an dem Wassertank und an dem Grundgerät zueinander passende mechanische, formschlüssige Führungs- und Befestigungsmittel ausgebildet, die sich über die Höhe des Wassertanks erstrecken. Diese mechanischen Führungsmittel stellen häufig eine Randbedingung dar, die bei einer Formgebung des Kaffee-Vollautomaten zu beachten ist.

Der Erfindung liegt die Aufgabe zu Grunde, einen Kaffee-Vollautomaten zu schaffen, der eine freiere Formgebung ermöglicht.

Aus SuperautoPro: "Jura Impressa S9 One-Touch Video", Youtube, 22. Januar 2018, Seite 2 pp., https://www.youtube.com/watch?v=b90-AKHyo3E, ist ein Kaffee-Vollautomat mit einem von einem Grundgerät abnehmbaren Wassertank bekannt.

Aus CN 208 192 933 U ist eine Soja-Bohnenmilchmaschine bekannt, bei der ein magnetisches Element an einem Grundkörper und eine längliche Metallplatte aus Eisen oder Stahl an einem Wasserbehälter ausgebildet ist.

Aus EP 3 015 035 A1 sind ein Wasserbehälter für einen Getränkeautomaten sowie ein Getränkeautomat bekannt, wobei der Wasserbehälter eine mittels eines Deckels verdeckbare Einfüllöffnung aufweist, wobei im angebauten Zustand des Wasserbehälters an dem Getränkeautomaten oberhalb der Einfüllöffnung ein Einfüllbereich definiert ist und wobei der Deckel mittels einer Führungseinrichtung führbar ist, welche ein Verschwenken des Deckels aus dem Einfüllbereich heraus in mindestens ein festgelegte oder festlegbare Öffnungsposition ermöglicht, sodass der Einfüllbereich zumindest von oberhalb frei zugänglich ist.

Zur Lösung der genannten Aufgabe schlägt die Erfindung die Merkmale des Anspruchs 1 vor. Insbesondere schlägt die Erfindung somit bei einem Kaffee-Vollautomaten der eingangs beschriebenen Art vor, dass der Wassertank magnetisch an dem Grundgerät gehalten ist, dass der Wassertank einen Wasserbehälter und einen mit diesem vorzugsweise gelenkig verbundenen Deckel aufweist und dass ein magnetisch wirkendes

Koppelelement zur magnetischen Halterung an dem Deckel angeordnet ist. Die Erfindung ermöglicht somit eine Befestigung des Wassertanks an dem Grundgerät, ohne dass mechanische Führungsmittel an der Stelle erforderlich sind. Dies ermöglicht eine freie Gestaltung einer Außenfläche des Wassertanks insbesondere im Kontaktbereich mit dem Grundgerät.

Hierbei kann der Wassertank beispielsweise an einer von der Anschlussöffnung beabstandeten Stelle magnetisch gehalten sein.

Eine Anordnung des Koppelelements am Deckel hat den Vorteil, dass eine Geometrie des Wasserbehälters einfach gehalten werden kann. Dies ermöglicht eine Spritzguss-Fertigung des Wasserbehälters. Die Erfindung macht sich hier die Erkenntnis zunutze, dass ein Deckel in der Regel bereits eine komplexere Form hat als ein zugehöriger Behälter, so dass eine Anordnung und/oder Ausbildung des Koppelelements am Deckel fertigungstechnisch weniger Aufwand bereitet.

Das magnetisch wirkende Koppelelement kann beispielsweise ein Permanentmagnet und/oder ein Material, das in ein Magnetfeld hineingezogen wird, sein. Die Verwendung eines Permanentmagneten hat den Vorteil, dass höhere Haltekräfte bei vergleichsweise geringem Platzbedarf erreichbar sind. Die Verwendung von einem Material, das in ein Magnetfeld hineingezogen wird, zum Beispiel Eisen oder eine Eisenlegierung, hat den Vorteil, dass eine kostengünstige Herstellung ermöglicht ist.

Der Wassertank kann beispielsweise einen offenen Behälter und einen Deckel aufweisen.

Es sind somit symmetrische Wassertanks verwendbar, die auf einer Vorderseite und einer Rückseite gleich aussehen.

Alternativ oder zusätzlich können zur Lösung der genannten Aufgabe erfindungsgemäß die Merkmale des zweiten unabhängige Anspruchs vorgesehen sein. Insbesondere wird somit bei einem Kaffee-Vollautomaten der eingangs beschriebenen Art gemäß einem zweiten Aspekt der Erfindung vorgeschlagen, dass der Wassertank an einer vorzugsweise von der Anschlussöffnung beabstandeten Stelle magnetisch an dem Grundgerät gehalten ist und dass ein Permanentmagnet als ein magnetisch wirkendes Koppelelement zur magnetischen Halterung an dem Wassertank angeordnet ist. Somit ist ein größerer Platzverbrauch, wie er sich häufig bei Metallplatten ergibt, die einen magnetischen Kreis zwischen zwei magnetischen Polen schließen sollen, vermeidbar.

Besonders günstig ist es, wenn die magnetische Kopplung zwischen einem Koppelelement und einem Gegenkoppelelement ausgebildet ist, wobei das Gegenkoppelelement einen Permanentmagneten aufweist oder bildet. Von Vorteil ist dabei dass größere Haltekräfte in kleinerem Raum im Vergleich zu einer Kombination Permanentmagnet - Eisen (oder Eisenlegierung) erreichbar sind.

Hierbei kann es günstig sein, wenn das Koppelelement und/ oder das Gegenkoppelelement beweglich, insbesondere um eine Achse quer, bevorzugt senkrecht, zu einem magnetischen Dipolmoment (z.B. des jeweils anderen Permanentmagneten) drehbar angeordnet ist, ist/sind. Somit sind Fehlorientierungen, die zu einer Abstoßung führen könnten, beispielsweise durch Montagefehler, vermeidbar und/oder selbsttätig korrigierbar, indem sich das Koppelelement und/oder das Gegenkoppelelement entsprechend ausrichtet/ausrichten.

Günstig ist es hierbei, wenn das Koppelelement und/oder das Gegenkoppelelement als eine Kugel ausgebildet sind. Von Vorteil ist dabei, dass eine spielbehaftete Kugel von allein die richtige Orientierung zur Generierung eine große Haltekraft erreicht, insbesondere wenn das Koppelelement und/oder das Gegenkoppelelement als Permanentmagneten ausgebildet sind.

Das jeweils andere Teil, also das Gegenkoppelelement und/ oder das Koppelelement, kann hierbei auch als ein Stabmagnet ausgebildet sein. Dies ermöglich einen dichten Austritt von Feldlinien, woraus sich eine hohe Haltekraft ergibt.

Alternativ oder zusätzlich können zur Lösung der genannten Aufgabe erfindungsgemäß auch die Merkmale des dritten unabhängigen Anspruchs vorgesehen sein. Insbesondere wird somit bei einem Kaffee-Vollautomaten der eingangs beschriebenen Art gemäß einem dritten Aspekt der Erfindung vorgeschlagen, dass der Wassertank an einer vorzugsweise von der Anschlussöffnung beabstandeten Stelle magnetisch an dem Grundgerät gehalten ist und dass ein magnetisch wirkendes Gegenkoppelelement zur magnetischen Halterung an dem Grundgerät, insbesondere beabstandet zu der Anschlussöffnung unter einer Abdeckung aus Kunststoff angeordnet ist. Somit kann das Grundgerät leichter reinigbar sein.

Das Gegenkoppelelement kann hierbei beispielsweise ein Permanentmagnet und/oder ein Material, das in ein Magnetfeld hineingezogen wird, sein.

Besonders günstig ist eine bereits beschriebene Paarung zweier Permanentmagnete für die magnetische Kopplung, da so eine ausreichende Haltekraft durch die Abdeckung erreichbar ist.

Die Abdeckung kann hierbei Teil einer Kapselung des Gegenkoppelelements ausgebildet sein. Dies erleichtert eine Montage.

Besonders günstig ist es, wenn das Gegenkoppelelement beweglich - beispielsweise mit einem Spiel - in der Kapselun angeordnet ist, wie dies bereits erörtert wurde.

Bei einer Ausgestaltung der Erfindung kann vorgesehen sein, dass der Wasserauslass mit der Anschlussöffnung steckverbindbar ist. Von Vorteil ist dabei, dass der Wassertank einfach entnehmbar und einsetzbar ist. Von Vorteil ist weiterhin, dass der Wassertank an seinem unteren Ende mit einer Steckverbindung formschlüssig haltbar ist. Hierbei kann vorgesehen sein, dass eine magnetische Haltekraft der magnetischen Halterung quer zu einer Steckrichtung einer Steckverbindung ausgerichtet ist. Somit ist ein Kippen des Wassertanks um einen festen Punkt, der durch die Steckverbindung geschaffen ist, verhinderbar.

Bei einer Ausgestaltung der Erfindung kann vorgesehen sein, dass ein magnetisch wirkendes Koppelelement zur magnetischen Halterung an dem Wassertank angeordnet ist. Somit ist auf einfache Weise eine magnetische Haltekraft aufbringbar. Das Koppelelement kann beispielsweise als ein Permanentmagnet ausgebildet sein. Das Koppelelement kann beispielsweise alternativ oder zusätzlich als ein Material, das in ein Magnetfeld hineingezogen wird, ausgebildet sein, beispielsweise aus einem ferromagnetischen Metall. Das Koppelelement kann hierbei in eine Wandung des Wassertanks, insbesondere des Wasserbehälters, integriert sein, beispielsweise in eine Öffnung der Wandung eingesetzt, in die

Wandung eingegossen und/oder auf die Wandung innenseitig und/oder außenseitig aufgesetzt.

Das Koppelelement kann alternativ oder zusätzlich in den Deckel integriert sein. Somit ist ein Spritzgusswerkzeug für den Wasserbehälter einfacher haltbar. Dies ist günstig, wenn der Wasserbehälter an sich schon eine komplexe Form, beispielsweise durch Wölbungen und/oder durch hohe Seitenwände, aufweist.

Es kann hierbei vorgesehen sein, dass das Koppelelement näher zu einer Befüllöffnung als zu dem Wasserauslass angeordnet ist. Von Vorteil ist dabei, dass die erfindungsgemäße zusätzliche Halterung des Wassertanks in einem großen Abstand zu einer Auflage des Wassertanks und/oder oberhalb seines Schwerpunktes zumindest im gefüllten Zustand ausgebildet werden kann. Dies erfordert nur geringe (seitliche) Haltekräfte, um den Wassertank stabil zu halten.

Bei einer Ausgestaltung der Erfindung kann vorgesehen sein, dass ein magnetisch wirkendes Gegenkoppelelement zur magnetischen Halterung an dem Grundgerät angeordnet ist. Somit ist auf einfache Weise eine magnetische Haltekraft auf den Wassertank aufbringbar. Das Gegenkoppelelement kann beispielsweise als ein Permanentmagnet ausgebildet sein. Das Gegenkoppelelement kann beispielsweise alternativ oder zusätzlich als ein Material, das in ein Magnetfeld hineingezogen wird, ausgebildet sein, beispielsweise aus einem ferromagnetischen Metall. Es kann hierbei vorgesehen sein, dass das Gegenkoppelelement beabstandet zu der Anschlussöffnung angeordnet ist. Dieser Ausgestaltung macht sich zunutze, dass die Anschlussöffnung in der Nähe der Auflage für den Wasserbehälter angeordnet ist. Dies ermöglicht, die magnetische Haltekraft in einem möglichst weiten Abstand von dieser Auflage auszubilden. Die magnetische Haltekraft kann somit sehr gering ausgebildet werden, um den Wassertank sicher in seiner aufrechten Position zu halten.

Bevorzugt sind das Koppelelement und das Gegenkoppelelement zueinander korrespondierenden Positionen angeordnet.

Bei einer Ausgestaltung der Erfindung kann vorgesehen sein, dass die Anschlussöffnung unterhalb des Gegenkoppelelements angeordnet ist. Von Vorteil ist dabei, dass die magnetische Haltekraft bevorzugt vertikal oberhalb einer Auflage des Wassertanks einbringbar ist. Somit kann ein Kippen des Wassertanks mit geringer Haltekraft verhindert werden.

Bei einer Ausgestaltung der Erfindung kann vorgesehen sein, dass die Anschlussöffnung an einer Auflage für den Wassertank ausgebildet ist. Somit ist auf einfache Weise die Gewichtskraft des Wassertanks aufnehmbar, ohne die magnetische Halterung zu belasten. Die magnetische Haltekraft kann somit gering ausgestaltet werden.

Bei einer Ausgestaltung der Erfindung kann vorgesehen sein, dass der Wassertank zumindest in einer Richtung, in der er magnetisch gehalten ist, eine kleinere horizontale Abmessung aufweist als seine vertikale Abmessung. Somit sind Wassertank einsetzbar, bei denen beispielsweise die Grundfläche kleiner als eine Seitenfläche ist. Bei diesen Wassertanks besteht notorisch die Gefahr eines Kippens, was durch die beschriebene magnetische Halterung verhinderbar ist. Beispielsweise kann vorgesehen sein, dass die horizontale Abmessung höchstens 50%, bevorzugt höchstens 20%, der vertikalen Abmessung beträgt. Es sind somit turnusförmige Wassertank mit praktisch unbegrenzt Gestaltungsmöglichkeit einsetzbar.

Bei einer Ausgestaltung der Erfindung kann vorgesehen sein, dass der Wassertank in Gebauchsstellung an einer führungsmittelfreien Seitenfläche des Grundgeräts anliegt. Dies ermöglicht eine ansprechende Formgebung sowohl des Grundgeräts als auch des Wassertanks jeweils für sich genommen. Beispielsweise kann vorgesehen sein, dass der Wassertank flächig an der Seitenfläche anliegt. Die einander korrespondierenden Seitenflächen können hierbei eben oder zueinander passend gekrümmt ausgebildet sein.

Bei einer vorteilhaften Ausgestaltung kann vorgesehen sein, dass der Wassertank einen Wasserbehälter und einen Deckel aufweist. Somit ist eine Befüllöffnung leicht bildbar. Es sind so auch unterschiedliche Werkzeuge für die Herstellung von Deckel und Wasserbehälter verwendbar. Beispielsweise kann vorgesehen sein, dass der Deckel mit dem Wasserbehälter verbunden ist. Somit ist der Deckel verliersicher anbringbar Vorzugsweise ist der Deckel gelenkig mit dem Wasserbehälter verbunden, beispielsweise über ein Doppelgelenk eines Klapparms. Die Verwendung eines Doppelgelenks kann benutzt werden, um die Haltekraft beim Abnehmen des Deckels leicht zu überwinden.

Die Erfindung nun anhand eines Ausführungsbeispiels näher beschrieben, ist aber nicht auf dieses Ausführungsbeispiel beschränkt. Weitere Ausführungsbeispiel ergeben sich durch Kombination der Merkmale einzelner oder mehrerer Schutzansprüche untereinander und/oder mit einzelnen oder mehreren Merkmalen des Ausführungsbeispiels.

Es zeigt:
- Figur 1: einen erfindungsgemäßen Kaffee-Vollautomaten in dreidimensionaler Schrägansicht,
- Figur 2: den Wassertank aus Figur 1 mit abgenommenem Deckel
- Figur 3: einen Ausschnitt aus Figur 2,
- Figur 4: einen Vertikalschnitt durch den Wassertank aus
- Figur: Fig 2,
- Figur 5: ein Detail aus Figur 4,
- Figur 6: den Kaffee-Vollautomaten aus Figur 1 in einer horizontal aufgeschnittenen Ansicht,
- Figur 7: eine horizontale Schnittdarstellung durch den Wassertank mit angrenzendem Gehäuse des Grundgeräts
- Figur 8: zu der Ansicht gemäß Figur 6, eine Ansicht auf die Rückseite des abgenommenen Wassertanks aus Figur 1,
- Figur 9: eine Ansicht auf die Rückseite des Wassertanks aus Figur 8 mit geöffnetem Deckel,
- Figur 10: eine Ansicht auf eine Seite des Wassertanks aus Fi 9,
- Figur 11: eine Ansicht von oben auf den Wassertank aus

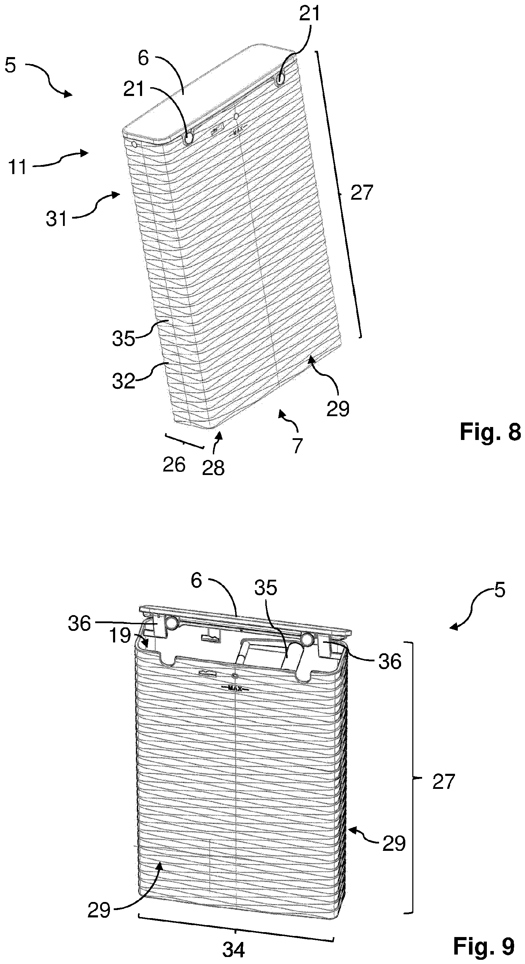

- Figur 9: und

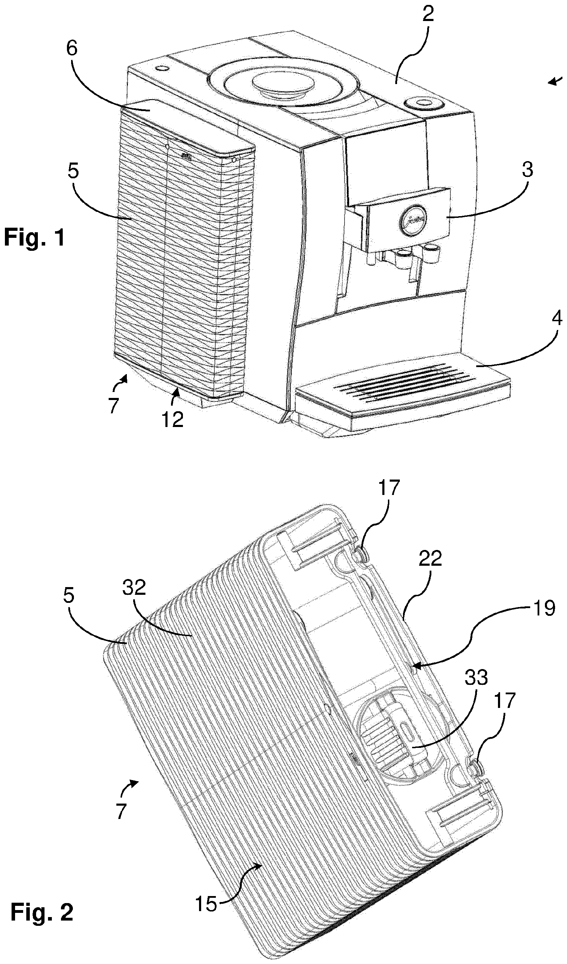

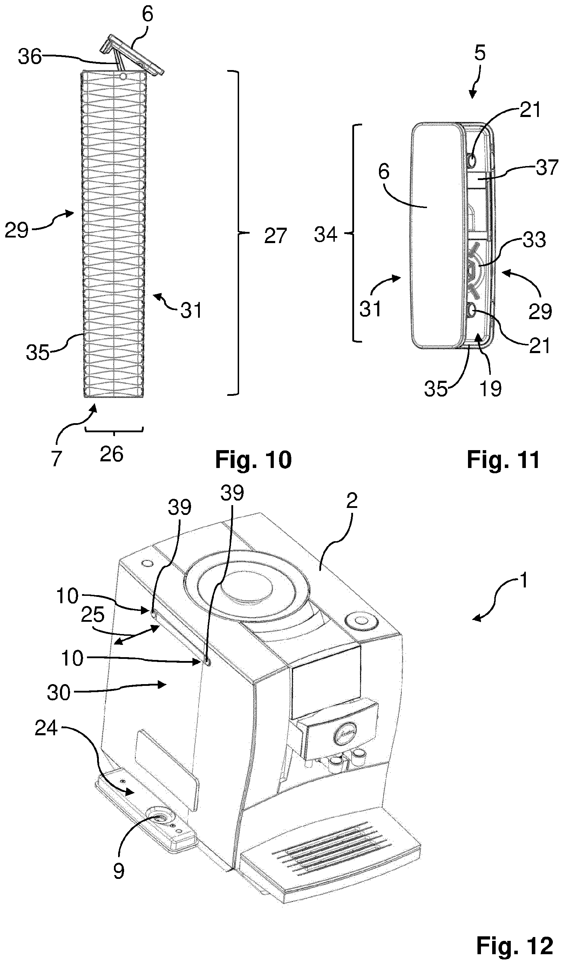

- Figur 12: eine dreidimensionale Schrägansicht auf den Kaffee Vollautomaten gemäß Figur 1 mit abgenommenem Wassertank.

Figur 1 zeigt in einer dreidimensionalen Schrägansicht einen erfindungsgemäßen Kaffee-Vollautomaten 1.

Der Kaffee-Vollautomat 1 hat ein Grundgerät 2, an dem eine Abgabeeinheit 3 zur Abgabe von Heißgetränken und (im Inneren) nicht weiter dargestellte Mittel zur Herstellung von Heißgetränken ausgebildet sind. Das Grundgerät 2 hat außerdem eine Tassenablage 4, auf welcher Tassen oder Becher unterhalb der Abgabeeinheit 3 in an sich bekannter Weise platzierbar sind, um das jeweils gewünschte Getränk zu beziehen.

An dem Grundgerät 2 ist ein Wassertank 5 angeordnet, der einen Wasservorrat zur Bereitung der Getränke bereithält.

Der Wassertank 5 hat einen Deckel 6, der abgenommen werden kann, um den Wasserbehälter 35 zu füllen. Wasserbehälter 35 und Deckel 6 bilden im Wesentlichen den abnehmbaren Wassertank 5.

Figur 2 zeigt den abgenommenen Wassertank 5 ohne Deckel 6. Der Wasserbehälter 35 weist an seiner Unterseite 7 einen Wasserauslass 8 auf, über welchen das bevorratete Wasser an das Grundgerät 2 abgegeben werden kann.

Figur 9 zeigt das Grundgerät aus Figur 1 mit abgenommenem Wassertank 5. In Figur 9 ist die Anschlussöffnung 9 ersichtlich, welche mit dem Wasserauslass 8 des Wassertanks 5 koppelbar ist, um das Wasser in das Grundgerät 2 zu führen.

Der Wassertank 5 wird zum Gebrauch auf die Anschlussöffnung gesetzt und an einer Stelle 10, die von der Anschlussöffnung beabstandet ist und zu einem oberen Bereich 11 des Wassertanks 5 korrespondiert, in noch genauer zu beschreibender Weise magnetisch gehalten. Die Verbindung des Wasserauslasses 8 mit der Anschlussöffnung 9 erfolgt durch eine vertikal entlang einer Steckverbindung 12 ausgerichtete Steckbewegung. Die magnetische Haltekraft an der Stelle 10 wirkt quer zu dieser Steckrichtung 12. Hierdurch ergibt sich ein Kontaktbereich 13 an der Außenfläche 14 auf einer Rückseite des Wassertanks 5.

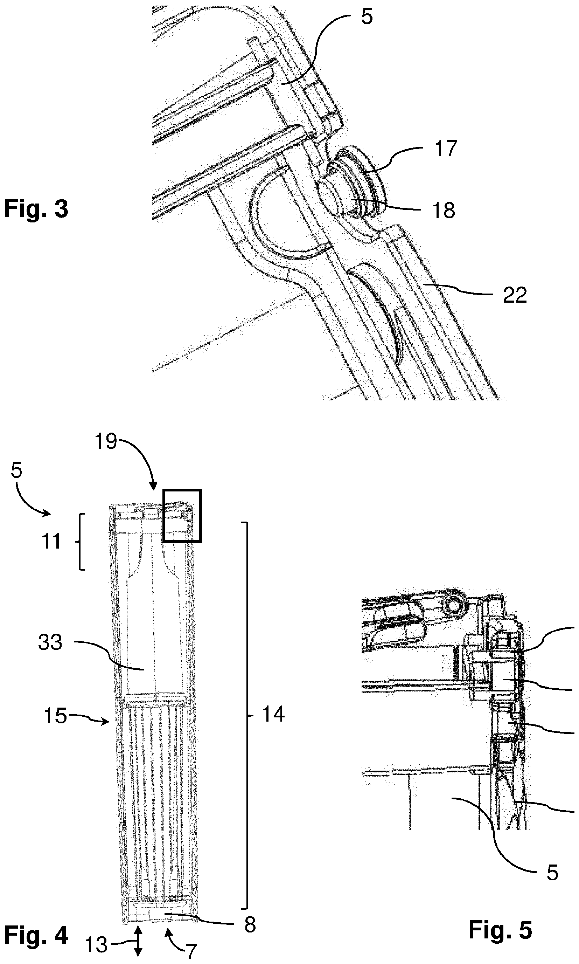

Die magnetische Haltekraft wird durch eine Halterung 16 bewirkt, die in den Figuren 3, 5 und 7 gezeigt und im Folgenden näher beschrieben ist. Man kann sagen, dass die Haltekraft quer zur Steckrichtung 12 ausgerichtet ist.

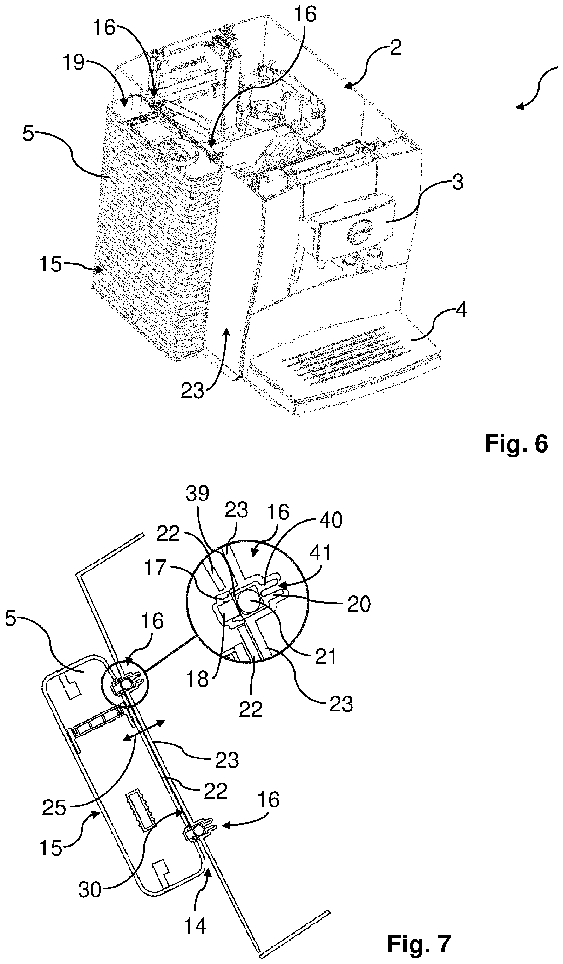

Die Figur 3 ist hierbei eine Vergrößerung aus der Figur 2, die Figur 5 eine Vergrößerung aus der rechten oberen Ecke von Figur 4, während die Figur 7 einen Teil der zweidimensionalen Schnittdarstellung zu der dreidimensionalen Schnittdarstellung nach Figur 6 darstellt.

Auf Seiten des Wassertanks 5 ist ein Koppelelement 17 mit einem Permanentmagneten 18 ausgebildet.

In den Figuren 9 bis 11 ist ersichtlich, dass das Koppelelement 17 an dem Deckel 6 ausgebildet ist. Das Koppelelement 17 ist bei geschlossenem Deckel 6 in dem oberen Bereich 11 des Wasserbehälters 35 und somit näher an einer Befüllöffnung 19 (vgl. Fig. 2) als an dem bereits erwähnten Wasserauslass 8 angeordnet. Die Befüllöffnung 19 ist mit dem Deckel 6 verschließbar.

Das Grundgerät 2 hat ein korrespondierendes Gegenkoppelelement 20 mit einem Permanentmagneten 21. Der Permanentmagnet 21 ist so ausgerichtet, dass sich im Zusammenspiel mit dem Permanentmagneten 18 die magnetische Haltekraft ergibt, die entlang einer Richtung 25 wirkt. Statt des Permanentmagneten 21 kann auch ein ferromagnetischer Körper ausgebildet sein, der in das Magnetfeld des Permanentmagneten 18 hineingezogen und somit von dem Permanentmagneten 18 angezogen wird. Alternativ kann auch der Permanentmagnet 18 durch einen solchen Körper ersetzt sein.

Während der Permanentmagnet 18 in den Deckel 6 eingegossen oder eingeklebt sein kann, ist der Permanentmagnet 21, der als Kugel ausgebildet sein kann, mit einem Spiel ausgestattet, so dass er in einer Kapselung 40 beweglich angeordnet ist. Der Dipol des Permanentmagneten 21 kann sich so leicht auf den Dipol des Permanentmagneten 18 ausrichten, selbst wenn der Permanentmagnet 18 verkehrt herum montiert wurde. Der Permanentmagnet 18 ist hierbei als Stabmagnet ausgebildet.

Bei einem weiteren Ausführungsbeispiel ist der Permanentmagnet 18 als Kugel ausgebildet und spielbehaftet angeordnet. Der Permanentmagnet 21 kann hierbei als beweglich Kugel ausgebildet oder unbeweglich angeordnet sein.

Die Kapselung 40 weist eine Abdeckung 39 aus, die auf einer Verbindungslinie zwischen dem Koppelelement 17 und dem Gegenkoppelelement 21 angeordnet ist. Eine Ausnehmung 41 dient zur Schraubbefestigung am Gehäuse 23.

In den Figuren ist zu sehen, dass zwei gleichartige Halterungen 16 im horizontalen Abstand zueinander ausgebildet sind.

Das Koppelelement 17 ist in die Wandung 22 des Wassertanks 5 integriert. Das Gegenkoppelelement 20 ist in ein Gehäuse 23 des Grundgeräts 2 integriert.

Die Anschlussöffnung 9 ist in eine Auflage 24 integriert, welche das Gewicht des befüllten Wassertanks 5 aufnimmt.

Der Wassertank 5 weist in der Richtung 25 der magnetischen Haltekraft eine horizontale Abmessung 26 auf, die geringer ist als eine vertikale Abmessung 27 des Wassertanks 5.

Es ergibt sich somit eine längliche Grundfläche 28 des Wassertanks 5, die kleiner ist als eine größte Seitenfläche des Wassertanks 5.

Die Seitenfläche 29 ist mehr als doppelt so groß wie die Grundfläche 28. Bei dem vorliegenden Wassertanks 5 kann sogar gesagt werden, dass alle Seitenflächen, also auch die seitlichen Seitenflächen 38, jeweils deutlich größer als die Grundfläche 28 sind. Dies ergibt einen Wassertank 5 von turmförmiger Gestalt.

Die Seitenflächen 29, 31, 38 des Wassertanks sind frei von mechanischen Führungsmitteln, mit welchen eine formschlüssige Verbindung herstellbar wäre, ausgebildet. Gleiches gilt für die Seitenfläche 30 des Grundgeräts 2.

Es kann gesagt werden, dass die rückwärtige Seitenfläche 29 des Wassertanks 5 gemäß Figur 8 im Wesentlichen gleich zu der vorderen Seitenfläche 31 des Wassertanks 5 gemäß Figur 1 oder Figur 2 ausgestaltet ist. Der Wassertank 5 ist somit äußerlich symmetrisch ausgebildet.

Die Seitenflächen 29, 31, 38 des Wasserbehälters 35 sind transparent ausgebildet, um einen Füllstand anzuzeigen. Sie weisen eine Struktur auf, die ein Inneres des Wasserbehälters 35 nur undeutlich erscheinen lässt. Somit ist insbesondere ein Filter 33 im Inneren des Wasserbehälters 35 kaschierbar (vgl Fig. 4).

In den Figuren 9 bis 11 ist noch erkennbar, dass der Deckel 6 unverlierbar an dem Wasserbehälter 35 befestigt ist. Hierzu ist der Deckel 6 über einen Klapparm 36 gelenkig mit dem Wasserbehälter 35 verbunden. Der Klapparm 36 bildet an seinen Enden jeweils ein Gelenk, so dass sich der Deckel 6 komplett wegschwenken lässt, um ein Befüllen zu erleichtern und um Platz für einen ausklappbaren Handgriff 37 zu machen.

Bei dem Kaffee-Vollautomat 1 wird somit vorgeschlagen, einen abnehmbaren Wassertank 5 mit einer magnetischen Haltekraft an einem Grundgerät 2 des Kaffee-Vollautomaten 1 zu halten.

### Bezugszeichenliste

- 1: Kaffee-Vollautomat
- 2: Grundgerät
- 3: Abgabeeinheit
- 4: Tassenablage
- 5: Wassertank
- 6: Deckel
- 7: Unterseite des Wassertanks
- 8: Wasserauslass
- 9: Anschlussöffnung
- 10: Stelle
- 11: oberer Bereich des Wassertanks
- 12: Steckverbindung
- 13: Steckrichtung
- 14: Kontaktbereich
- 15: Außenfläche
- 16: Halterung
- 17: Koppelelement
- 18: Permanentmagnet
- 19: Befüllöffnung
- 20: Gegenkoppelelement
- 21: Permanentmagnet
- 22: Wandung des Wasserbehälters
- 23: Gehäuse des Grundgeräts
- 24: Auflage für den Wasserbehälter
- 25: Richtung
- 26: horizontale Abmessung
- 27: vertikale Abmessung
- 28: Grundfläche des Wasserbehälters
- 29: (rückwärtige) Seitenfläche des Wasserbehälters
- 30: Seitenfläche des Grundgeräts
- 31: (vordere) Seitenfläche des Wasserbehälters
- 32: Struktur
- 33: Filter
- 34: horizontale Abmessung
- 35: Wasserbehälter
- 36: Klapparm
- 37: Handgriff
- 38: (seitliche) Seitenfläche des Wasserbehälters
- 39: Abdeckung von 21

## Patentansprüche

1. Kaffee-Vollautomat (1), mit einem von einem Grundgerät (2) abnehmbaren Wassertank (5), der einen Wasserauslass (8) aufweist, wobei der Wasserauslass (8) mit einer Anschlussöffnung (9), die an dem Grundgerät (2) ausgebildet ist, zur Wasserentnahme im Gebrauch verbindbar ist, **dadurch gekennzeichnet, dass** der Wassertank (5) an einer vorzugsweise von der Anschlussöffnung (9) beabstandeten Stelle (10) magnetisch an dem Grundgerät (2) gehalten ist, dass der Wassertank (5) einen Wasserbehälter (35) und einen mit diesem vorzugsweise gelenkig verbundenen Deckel (6) aufweist und dass ein magnetisch wirkendes Koppelelement (17), insbesondere ein Permanentmagnet (18) und/oder ein Material, das in ein Magnetfeld hineingezogen wird, zur magnetischen Halterung (16) des Wassertanks (5) an dem Grundgerät (2) an dem Deckel (6) angeordnet ist.

2. Kaffee-Vollautomat (1) nach Anspruch 1, **dadurch gekennzeichnet, dass** der Wassertank (5) an einer vorzugsweise von der Anschlussöffnung (9) beabstandeten Stelle (10) magnetisch an dem Grundgerät (2) gehalten ist und dass ein Permanentmagnet (18) als ein magnetisch wirkendes Koppelelement (17) zur magnetischen Halterung (16) an dem Wassertank (5) angeordnet ist.

3. Kaffee-Vollautomat (1) nach einem der vorangehenden Ansprüche, **dadurch gekennzeichnet, dass** die magnetische Halterung (16) durch zwei Permanentmagnete (18, 21) bewirkt ist, insbesondere wobei ein Permanentmagnet (18) kugelförmig und/oder ein Permanentmagnet (21) stabförmig ausgebildet ist.

4. Kaffee-Vollautomat (1) nach einem der vorangehenden Ansprüche, **dadurch gekennzeichnet, dass** das Koppelelement (17) und/oder das Gegenkoppelelement (20) beweglich, insbesondere um eine Achse quer, bevorzugt senkrecht, zu einem magnetischen Dipolmoment drehbar angeordnet ist, sind

5. Kaffee-Vollautomat (1) nach einem der vorangehenden Ansprüche, **dadurch gekennzeichnet, dass** der Wassertank (5) an einer vorzugsweise von der Anschlussöffnung (9) beabstandeten Stelle (10) magnetisch an dem Grundgerät (2) gehalten ist und dass ein magnetisch wirkendes Gegenkoppelelement (20), insbesondere ein Permanentmagnet (21) und/oder ein Material, das in ein Magnetfeld hineingezogen wird, zur magnetischen Halterung (16) an dem Grundgerät (2), insbesondere beabstandet zu der Anschlussöffnung (9), unter einer Abdeckung (39) aus Kunststoff angeordnet ist.

6. Kaffee-Vollautomat (1) nach einem der vorangehenden Ansprüche, **dadurch gekennzeichnet, dass** der Wasserauslass (8) mit der Anschlussöffnung (9) steckverbindbar ist, insbesondere wobei eine magnetische Haltekraft der magnetischen Halterung (16) quer zu einer Steckrichtung (13) der Steckverbindung (12) ausgerichtet ist.

7. Kaffee-Vollautomat (1) nach einem der vorangehenden Ansprüche, **dadurch gekennzeichnet, dass** ein magnetisch wirkendes Koppelelement (17), insbesondere ein Permanentmagnet (18) und/oder ein Material, das in ein Magnetfeld hineingezogen wird, zur magnetischen Halterung (16) an dem Wassertank (5), insbesondere näher zu einer Befüllöffnung (19) als zu dem Wasserauslass (8), angeordnet ist.

8. Kaffee-Vollautomat (1) nach einem der vorangehenden Ansprüche, **dadurch gekennzeichnet, dass** ein magnetisch wirkendes Gegenkoppelelement (20), insbesondere ein Permanentmagnet (21) und/oder ein Material, das in ein Magnetfeld hineingezogen wird, zur magnetischen Halterung (16) an dem Grundgerät (2), insbesondere beabstandet zu der Anschlussöffnung (9), angeordnet ist.

9. Kaffee-Vollautomat (1) nach einem der vorangehenden Ansprüche, **dadurch gekennzeichnet, dass** die Anschlussöffnung (9) unterhalb des Gegenkoppelelements (20) angeordnet ist.

10. Kaffee-Vollautomat (1) nach einem der vorangehenden Ansprüche, **dadurch gekennzeichnet, dass** die Anschlussöffnung (9) an einer Auflage (24) für den Wassertank (5) ausgebildet ist.

11. Kaffee-Vollautomat (1) nach einem der vorangehenden Ansprüche, **dadurch gekennzeichnet, dass** der Wassertank (5) zumindest in einer Richtung (25), in der er magnetisch gehalten ist, eine kleinere horizontale Abmessung (26, 34) aufweist als seine vertikale Abmessung (27), insbesondere wobei die horizontale Abmessung (26, 34) höchstens 50%, bevorzugt höchstens 20%, der vertikalen Abmessung (27) beträgt.

12. Kaffee-Vollautomat (1) nach einem der vorangehenden Ansprüche, **dadurch gekennzeichnet, dass** der Wassertank (5) in Gebrauchsstellung an einer führungsmittelfreien Seitenfläche des Grundgeräts (30) vorzugsweise flächig anliegt.

13. Kaffee-Vollautomat (1) nach einem der vorangehenden Ansprüche, **dadurch gekennzeichnet, dass** der Wassertank (5) einen Wasserbehälter (35) und einen Deckel (6) aufweist, insbesondere wobei der Deckel (6) vorzugsweise gelenkig mit dem Wasserbehälter (35) verbunden ist.

## Claims

1. Fully automatic coffee machine (1) having a water tank (5) which is removable from a base unit (2) and which has a water outlet (8), wherein the water outlet (8) is connectable to a connection opening (9), formed on the base unit (2), for water extraction during use, **characterized in that** the water tank (5) is held magnetically on the base unit (2) at a location (10) preferably spaced apart from the connection opening (9), **in that** the water tank (5) has a water container (35) and a lid (6) which is connected, preferably in an articulated manner, thereto, and **in that** a magnetically acting coupling element (17), in particular a permanent magnet (18) and/or a material drawn into a magnetic field, for magnetic holding (16) of the water tank (5) on the base unit (2) is arranged on the lid (6).

2. Fully automatic coffee machine (1) according to Claim 1, **characterized in that** the water tank (5) is held magnetically on the base unit (2) at a location (10) preferably spaced apart from the connection opening (9), and **in that** a permanent magnet (18) is arranged, as a magnetically acting coupling element (17) for magnetic holding (16), on the water tank (5).

3. Fully automatic coffee machine (1) according to either of the preceding claims, **characterized in that** the magnetic holding (16) is brought about by two permanent magnets (18, 21), in particular wherein one permanent magnet (18) is of spherical form and/or one permanent magnet (21) is of bar-shaped form.

4. Fully automatic coffee machine (1) according to one of the preceding claims, **characterized in that** the coupling element (17) and/or the counterpart coupling element (20) are/is arranged so as to be movable, in particular so as to be rotatable about an axis transverse, preferably perpendicular, to a magnetic dipole moment.

5. Fully automatic coffee machine (1) according to one of the preceding claims, **characterized in that** the water tank (5) is held magnetically on the base unit (2) at a location (10) preferably spaced apart from the connection opening (9), and **in that** a magnetically acting counterpart coupling element (20), in particular a permanent magnet (21) and/or a material drawn into a magnetic field, for magnetic holding (16) is arranged on the base unit (2), in particular spaced apart from the connection opening (9), under a cover (39) composed of plastic.

6. Fully automatic coffee machine (1) according to one of the preceding claims, **characterized in that** the water outlet (8) is connectable to the connection opening (9) by plugging, in particular wherein a magnetic holding force of the magnetic holding (16) is oriented transversely to a plugging direction (13) of the plug connection (12).

7. Fully automatic coffee machine (1) according to one of the preceding claims, **characterized in that** a magnetically acting coupling element (17), in particular a permanent magnet (18) and/or a material drawn into a magnetic field, for magnetic holding (16) is arranged on the water tank (5), in particular closer to a filling opening (19) than to the water outlet (8).

8. Fully automatic coffee machine (1) according to one of the preceding claims, **characterized in that** a magnetically acting counterpart coupling element (20), in particular a permanent magnet (21) and/or a material drawn into a magnetic field, for magnetic holding (16) is arranged on the base unit (2), in particular spaced apart from the connection opening (9).

9. Fully automatic coffee machine (1) according to one of the preceding claims, **characterized in that** the connection opening (9) is arranged below the counterpart coupling element (20).

10. Fully automatic coffee machine (1) according to one of the preceding claims, **characterized in that** the connection opening (9) is formed on a support (24) for the water tank (5).

11. Fully automatic coffee machine (1) according to one of the preceding claims, **characterized in that** the water tank (5) has, at least in a direction (25) in which it is held magnetically, a smaller horizontal dimension (26, 34) than its vertical dimension (27), in particular wherein the horizontal dimension (26, 34) is at most 50%, preferably at most 20%, of the vertical dimension (27).

12. Fully automatic coffee machine (1) according to one of the preceding claims, **characterized in that**, in a position of use, the water tank (5) bears, preferably areally, against a side surface, free of guiding means, of the base unit (30).

13. Fully automatic coffee machine (1) according to one of the preceding claims, **characterized in that** the water tank (5) has a water container (35) and a lid (6), in particular wherein the lid (6) is connected, preferably in an articulated manner, to the water container (35).

## Revendications

1. Machine à café automatique (1) avec un réservoir d'eau (5) pouvant être démonté d'un appareil de base (2) qui comporte une sortie d'eau (8), la sortie d'eau (8) pouvant être reliée avec un orifice de raccordement (9) qui est formé sur l'appareil de base (2) pour prélever de l'eau lors de l'utilisation, **caractérisée en ce que** le réservoir d'eau (5) est maintenu magnétiquement sur l'appareil de base (2) à un emplacement (10) de préférence espacé de l'orifice de raccordement (9), que le réservoir d'eau (5) comporte un récipient d'eau (35) et un couvercle (6) relié à celui-ci de préférence de façon articulée et qu'un élément d'accouplement à action magnétique (17), en particulier un aimant permanent (18) et/ou un matériau qui est attiré dans un champ magnétique, est agencé sur le couvercle (6) pour la fixation magnétique (16) du réservoir d'eau (5) sur l'appareil de base (2).

2. Machine à café automatique (1) selon la revendication 1, **caractérisée en ce que** le réservoir d'eau (5) est maintenu magnétiquement sur l'appareil de base (2) à un emplacement (10) de préférence espacé de l'orifice de raccordement (9), et qu'un aimant permanent (18) est agencé en guise d'élément d'accouplement à action magnétique (17) pour la fixation magnétique (16) sur le réservoir d'eau (5).

3. Machine à café automatique (1) selon une des revendications précédentes, **caractérisée en ce que** la fixation magnétique (16) est exercée par deux aimants permanents (18, 21), en particulier un aimant permanent (18) étant configuré en forme de bille et/ou un aimant permanent (21) en forme de tige.

4. Machine à café automatique (1) selon une des revendications précédentes, **caractérisée en ce que** l'élément d'accouplement (17) et/ou l'élément d'accouplement opposé (20) sont agencés de façon mobile, en particulier pivotante autour d'un axe transversal, de préférence perpendiculaire, à un moment dipolaire magnétique.

5. Machine à café automatique (1) selon une des revendications précédentes, **caractérisée en ce que** le réservoir d'eau (5) est maintenu magnétiquement sur l'appareil de base (2) à un emplacement (10) de préférence espacé de l'orifice de raccordement (9) et qu'un élément d'accouplement opposé à action magnétique (20), en particulier un aimant permanent (21) et/ou un matériau qui est attiré dans un champ magnétique, est agencé pour la fixation magnétique (16) sur l'appareil de base (2), en particulier à distance de l'ouverture de raccordement (9) sous un capot (39) en plastique.

6. Machine à café automatique (1) selon une des revendications précédentes, **caractérisée en ce que** la sortie d'eau (8) peut être reliée par enfichage avec l'ouverture de raccordement (9), une force de retenue magnétique de la fixation magnétique (16) étant en particulier orientée transversalement à une direction d'enfichage (13) de la fiche de raccordement (12).

7. Machine à café automatique (1) selon une des revendications précédentes, **caractérisée en ce qu'**un élément d'accouplement à action magnétique (17), en particulier un aimant permanent (18) et/ou un matériau qui est attiré dans un champ magnétique, est agencé pour la fixation magnétique (16) sur le réservoir d'eau (5), en particulier plus près d'un orifice de remplissage (19) que de la sortie d'eau (8).

8. Machine à café automatique (1) selon une des revendications précédentes, **caractérisée en ce qu'**un élément d'accouplement opposé à action magnétique (20), en particulier un aimant permanent (21) et/ou un matériau qui est attiré dans un champ magnétique, est agencé pour la fixation magnétique (16) sur l'appareil de base (16), en particulier à distance de l'orifice de raccordement (9).

9. Machine à café automatique (1) selon une des revendications précédentes, **caractérisée en ce que** l'orifice de raccordement (9) est disposé au-dessous de l'élément d'accouplement opposé (20).

10. Machine à café automatique (1) selon une des revendications précédentes, **caractérisée en ce que** l'orifice de raccordement (9) est formé sur un support (24) pour le réservoir d'eau (5).

11. Machine à café automatique (1) selon une des revendications précédentes, **caractérisée en ce que** le réservoir d'eau (5) présente, au moins dans une direction (25) dans laquelle il est fixé magnétiquement, une dimension horizontale (26, 34) inférieure à sa dimension verticale (27), en particulier la dimension horizontale (26, 34) étant égale à 50% maximum, 20% de préférence, de la dimension verticale (27).

12. Machine à café automatique (1) selon une des revendications précédentes, **caractérisée en ce qu'**en position d'utilisation, le réservoir d'eau (5) repose de préférence à plat sur une face latérale sans moyen de guidage de l'appareil de base (30).

13. Machine à café automatique (1) selon une des revendications précédentes, **caractérisée en ce que** le réservoir d'eau (5) comporte un récipient d'eau (35) et un couvercle (6), en particulier le couvercle (6) étant de préférence relié de façon articulée au récipient d'eau (35).
